# EUROPEAN PATENT APPLICATION

(11) **EP 2 857 079 A1**
(43) Date of publication of application: **08.04.2015**
(21) Application number: 13800384.3
(22) Date of filing: 04.06.2013
(51) Int. Cl.: B01D 29/07, B23H 1/10

(54) **FILTER DEVICE**

(30) Priority: 04.06.2012 JP 2012127600
(71) Applicant: Eastern Technics Corporation, Kanagawa 242-0024 (JP)
(72) Inventor: KAWANISHI Masahiko, Yamato-shi Kanagawa 242-0024 (JP); OKUWAKI Hisao, Yamato-shi Kanagawa 242-0024 (JP)
(74) Representative: Haley, Stephen
(86) International application number: PCT/JP2013/065481
(87) International publication number: WO 2013/183639

(57) **Abstract**

The present invention can withstand relatively high pressure and perform highly effective filtering operations by suppressing the degree of deformation of a filtering unit. After the filtering operations, separation of the filtering unit and external covers can be easily performed, and the rigid upper-side and lower-side covers can be reused so as to protect the environment. This invention comprises: a vertical tubular filter (1) that has a continuous polygonal form; a filtering unit (A) in which resin discs are adhered to the top and the bottom of the vertical tubular filter (1) by means of an adhesive; and an upper-side cover (B) and a lower-side cover (C) that are formed from a metal material, are able to provide a strong protection of the external periphery, the top, and the bottom of the filtering unit (A), and are provided with a plurality of ventilation holes. The upper-side cover (B) and the lower-side cover (C) are divided from each other, into two parts, in the vertical direction. During filtering operations, the top and the bottom are joined at the division site. During separation, the division site is fixed in the circumferential direction. The upper-side cover (B) and the lower-side cover (C) are formed from an upper-side outer tube (51) and a lower-side outer tube (55) respectively.

## Description

### TECHNICAL FIELD

The present invention relates to a filter device that can withstand a relatively high pressure and suppress a deformation amount of a filtering unit to enable highly efficient filtering work and, after the filtering work, enables easy disassembling of the filtering unit and an outer cover, enables repeated use of strong upper and lower covers, and can serve for protection of the environment.

### BACKGROUND ART

In a conventional filter device, a filter on the inside of the filter device is usually configured from filter paper, fiber, woven fabric, or non-woven fabric. For example, in a filter that purifies working fluid of an electric discharge machine, as more sludge is captured by the filter according to time of use of the filter, pressure on a supply side increases and filter efficiency is markedly deteriorated before the filter is clogged with the sludge and the pressure reaches a withstanding pressure. Therefore, under the present circumstances, the pressure is detected to replace the filter device.

In the filter device, in particular, in order to improve the filter efficiency even after implementing space reduction, the filter is housed in a case of a purifier as a cylindrical filter in a contiguous pleated form in order to secure as large a filtering area as possible. The filter device for the working fluid purification of the electric discharge machine is roughly classified into an internal pressure type filter device and an external pressure type filter device according to on which of the inner and outer sides of the cylindrical filter the working fluid including the sludge and pressurized and supplied is filtered.

In the internal pressure type filter device, since the sludge is collected on the inside, a filtering ability is further deteriorated as filtering advances. To keep a fixed or higher filtering ability, the entire filter has to be increased in size. If the filter is increased in size, the entire device becomes heavy when the sludge accumulates. Workability of replacement of the filter is deteriorated. The supplied working fluid applies pressure to the filter toward the outer side. Therefore, it is also necessary to manufacture the filter as a filter having pressure resistance. Since it is difficult to remove the sludge deposited on the inner side of the filter from the filter, it is difficult to clean the filter. Therefore, in general, the filter is disposable.

In the internal pressure type filter, when the filter is pressurized, a state occurs in which the center part of the filter swells and adhesive parts of the upper and lower ends and an upper lid and a lower lid of the cylindrical filter are peeled or cracked. There is a drawback in that a sufficient pressurizing force cannot be applied. As a commercially available filter device, a filter device excellent in pressure resistance is manufactured because supplied working fluid applies pressure to a filter in the radial direction. That is, the upper and lower ends and an upper lid and a lower lid of a cylindrical filter are water-tightly firmly fixed by an adhesive. The upper and lower ends and the upper lid and the lower lid of the cylindrical filter are integrated. Although the filter device is excellent in pressure resistance in this way, after use, the upper and lower ends and the upper lid and the lower lid of the cylindrical filter cannot be disassembled.

The filter itself is regarded as an expendable item. In addition, it is difficult to remove the sludge clogging the inside after the use from the inside of the filter. Therefore, when the filter reaches the end of usable life time (e.g., two or three to several months) when clogging occurs, the filter is disposed of. It is not considered to reuse the filter. From such viewpoints, the filter has to be disposable. In that case, even if the filter is paper, non-woven fabric, or the like, the upper lid, the lower lid, and the like are metal plates. Therefore, disposal of the entire filter is a serious problem in terms of environment protection as well.

For the disposal of the filter, Patent Document 1 has been developed as a device that can be disassembled. That is, the inner side of an inner side cylindrical filter, and an upper lid and a lower lid at the upper and lower ends of an outer side cylindrical filter can be separated and can be disassembled. Therefore, environmental measures are satisfactorily taken. However, Patent Document 1 has a significant drawback in that, even at a relatively low pressure (e.g., 1 kg/cm² to about 2 kg/cm²), a first end plate or a second end plate is, for example, deformed by a pressurizing force thereon and cannot be used.

Further, a heated and hardened curable plate body in the filter device is molded by inserting the lower end of the cylindrical filter into the adhesive made of synthetic resin. However, in such a case, the curable plate body is sometimes cracked and broken because of vibration, pressure, or the like during transportation or during work.

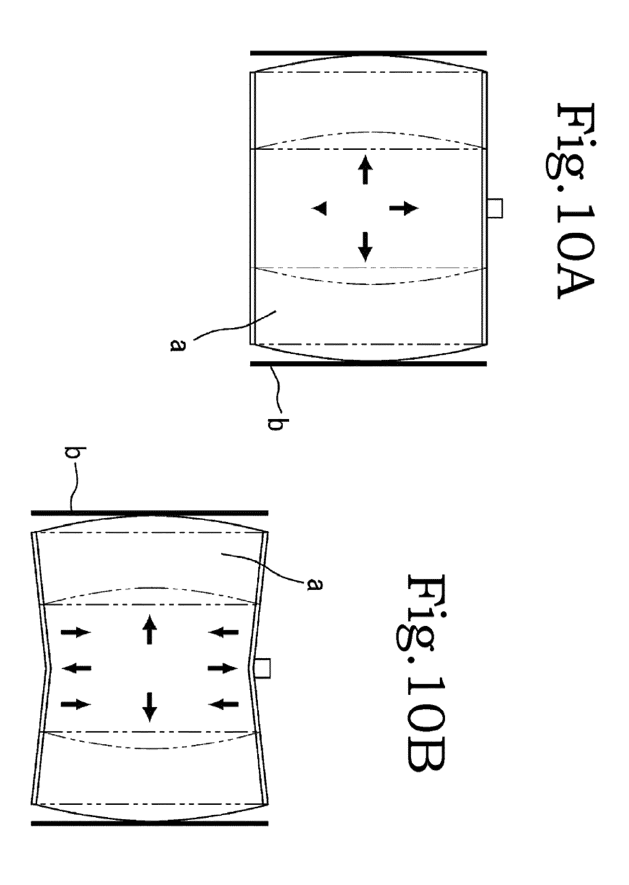

In particular, a process leading to breakage in the past is explained with reference to Fig. 10. After use for a predetermined time, working fluid enters from the center and flows out in the radial direction of the circumference of a cylindrical filter "a" of a filtering unit with water pressure. Therefore, the cylindrical filter "a" changes to a drum shape [see Fig. 10A]. A deformation amount increases according to clogging of filtering paper. A ratio of adhesion to an outer cylinder "b" increases.

When this state further advances and the cylindrical filter "a" adheres to the entire circumference of the outer cylinder, force for pulling the upper and lower surfaces to the center portion is generated. This pulling force is action of force generated when the filtering paper changes to a drum shape, whereby the distance between the top and the bottom of the cylindrical filter "a" decreases and the cylindrical filter "a" pulls the upper and lower surfaces [see Fig. 10B]. Further, sludge supply is continued and the internal pressure rises, the cylindrical filter "a" sometimes swells to the outer cylinder "b" to break the filtering unit.

Patent Document 1: Japanese Patent Application Laid-Open No. H10-76112
Patent Document 2: Japanese Patent Application Laid-Open No. H8-243314
Patent Document 3: Japanese Patent Application Laid-Open No. 2002-224505

### DISCLOSURE OF THE INVENTION

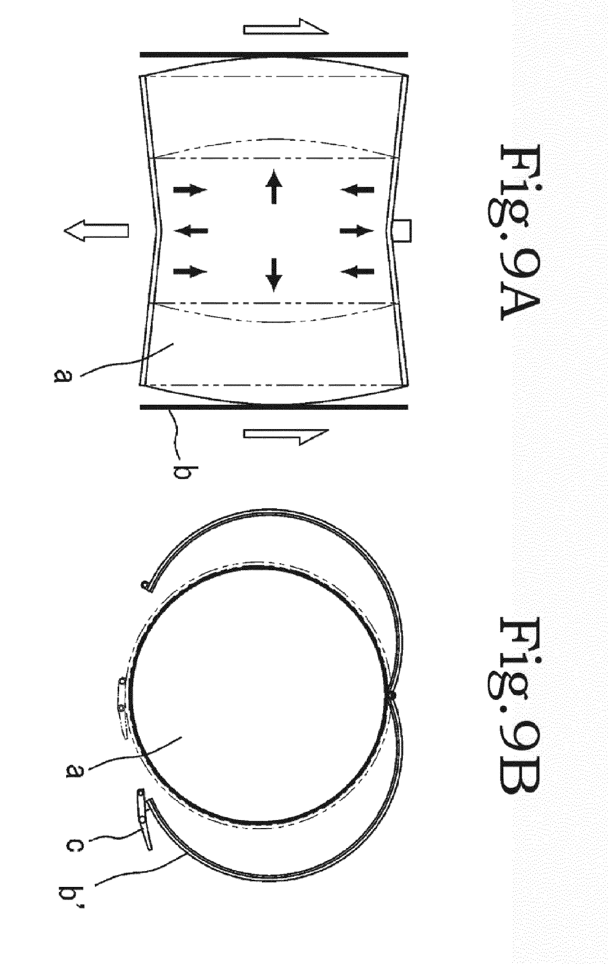

As a filter device that can be disassembled and reused while being sufficiently resistible against pressure of use, a filter device which has, in the exterior thereof, hinged double doors, is developed as Patent Document 2. Since the outer cylinder "a" of the filtering unit considerably swells and the force of the swelling is applied, as shown in Fig. 9B, a band "b"' cannot be easily opened. That is, since the band "b"' directly receives the applied state of the swelling force of the outer cylinder "a" of the filtering unit, the band "b"' cannot be opened.

Further, there is a drawback in that, specifically, in particular, in the state in which the swelling force of the outer cylinder "a" of the filtering unit is applied, when the divided band "b"' is opened, the force is applied to a fastener "c" simultaneously with the opening of the band "b" and the band "b" often cannot be detached. Further, in Patent Document 3, even in a configuration in which the band "b"' is vertically divided, in a type for binding the band "b"' with screws, it is extremely troublesome to detach the cylindrical filter "a" changed to a drum shape.

Therefore, the present invention provides a filter device that can be disassembled while realizing prevention of breakage of the filter device. A problem (a technical problem, an object, or the like) to be solved by the present invention is to realize development ofafilter device that can withstand a relatively high pressure and suppress a deformation amount of a filtering unit to enable highly efficient filtering work, enables easy disassembling work, and can serve for protection of the environment.

Therefore, as a result of earnestly repeating studies in order to solve the above problems, the inventor has solved the problems by devising an invention of claim 1 as a filter device including: a vertical cylindrical filter including contiguous polygonal lines; a filtering unit including resin disks bonded respectively to upper and lower parts of the cylindrical filter by an adhesive; and an upper side cover and a lower side cover made of metal, which can protect upper and lower parts and an outer circumference of the filtering unit and to strengthen the same, and which includes a large number of ventilation holes, wherein the upper side cover and the lower side cover are formed as two divisions in a height direction, the divisions are vertically connected during filtering work and fixed in a circumferential direction during disassembling, and an upper side outer cylinder and a lower side outer cylinder are respectively provided in the upper side cover and the lower side cover.

In an invention of claim 2, in claim 1, the inventor has solved the problem by configuring the filter device in which an imaginary inner diameter of the cylindrical filter is formed in a small circular shape, a small-diameter inner cylinder inserted into the small circular shape of the cylindrical filter is provided, and the resin disks in the upper and lower parts are supported by the small-diameter cylinder. In an invention of claim 3, in claim 1 or 2, the inventor has solved the problem by configuring the filter device in which the upper side outer cylinder and the lower side outer cylinder are formed in a cylindrical shape having the same diameter from lower to upper sides, and the cylindrical filter of the filtering unit is housed in the cylinder such that an outer circumference of the cylindrical filter of the filtering unit is in contact with the cylinder.

In an invention of claim 4, in claim 1 or 2, the inventor has solved the problem by configuring the filter device in which the upper side outer cylinder of the upper side cover has a diameter that gradually increases in size downward and the lower side outer cylinder of the lower side cover that has a diameter that gradually increases in size upward. In an invention of claim 5, in any one of claims 1, 2, 3, and 4, the inventor has solved the problem by configuring the filter device in which reinforcing hook sections are formed in the circumferences of the divided parts, and annular bands are detachably attached to the reinforcing hook sections.

In an invention of claim 6, in claim 5, the inventor has solved the problem by configuring the filter device in which the reinforcing hook sections are formed as rounded sections obtained by appropriately rounding the lower end of the upper side outer cylinder of the upper side cover and the upper end of the lower side outer cylinder of the lower side cover. In an invention of claim 7, in claim 5, the inventor has solved the problem by configuring the filter device in which the reinforcing hook sections are formed as linear sections made of metal.

In an invention of claim 8, in any one of claims 1, 2, 3, and 4, the inventor has solved the problem by configuring the filter device in which a reinforcing hook section is formed in one of the divisions, a plurality of locking sections are formed on the circumference of the reinforcing hook section, and a protrusion section to be locked to the locking section is provided to correspond to the locking section in the other one of the divisions corresponding to the reinforcing hook section.

In an invention of claim 9, in any one of claims 1, 2, 3, and 4, the inventor has solved the problem by configuring the filter device in which the upper side cover and the lower side cover are made of synthetic resin and integrally formed, a protrusion section is formed at the circumferential edge of one of the divisions, and a locking section capable of being locked to and unlocked from the protrusion section is formed in the other one of the divisions.

In the invention of claim 1, there is an advantage that the filter device can withstand a relatively high pressure and suppress a deformation amount of a filtering unit to enable highly efficient filtering work, enables easy disassembling work, enables repeated use of the firm upper and lower covers made of metal, and can serve for protection of the environment.

In particular, in the present invention, it is possible to perform efficient disassembling with minimum labor through disassembling in the up-down direction. In particular, it is possible to surely and easily disassemble the filtering unit and the upper side cover and the lower side cover made of metal. It is possible to dispose of only the filtering unit and use the upper side cover and the lower side cover made of metal many times. This enables genuine ecological use for the first time in the filter industry. There is also an advantage that it is possible to prevent breakage and damage of the cylindrical filter of the filtering unit through the presence of the small-diameter inner cylinder.

In the invention of claim 2, since the inner diameter inner cylinder is provided, it is also possible to make the filter device satisfactory in terms of strength as well. In the invention of claim 3, even if the center part of the filtering unit swells, since the disassembling in the up-down direction is performed, it is possible to perform markedly easy disassembling compared with when the center part is pulled out from the outer cylinder not divided in the up-down direction. In the invention of claim 4, in particular, since the filter unit is formed in the taper shape, even if the center part of the filtering unit swells, the moment the disassembling is implemented in the up-down direction, the center part does not come into contact with the external shape of the filtering unit. There is an effect that it is possible to extremely easily perform the disassembling.

In the invention of claim 5, since the reinforcing hook sections are formed around the divided parts, even if the swelling force of the swelling of the center part of the filtering unit markedly increases, deformation of the upper side cover and the lower side cover made of metal does not occur at all. Therefore, it is possible not to affect an operation force in the disassembling. It is possible to provide simple assembling work. In claims 6 and 7, it is possible to display an effect equivalent to the effect of the invention of claim 4. In the invention of claim 7, since the filter device is configured by the locking section and the protrusion section, it is necessary to rotate a part of the filter device. However, if the locking section and the protrusion section are formed in a tabular shape, in the present invention, when two filter devices are used inparallel, it is possible to further make the filter devices compact. In the invention of claims 7 and 8, there is an advantage that it is possible to easily perform disassembling by releasing the rotation even at a very small angle.

### BRIEF DESCRIPTION OF THE DRAWINGS

Fig. 1A is a longitudinal sectional view of a first embodiment of the present invention.
Fig. 1B is a partial enlarged sectional view of Fig. 1A.
Fig. 1C is an enlarged view of a (I) part of Fig. 1B.
Fig. 2 is a partially cut-away exploded perspective view of the first embodiment.
Fig. 3A is a perspective view of an annular band detached from an upper side cover and a lower side cover.
Fig. 3B is an exploded perspective view of the upper side cover and the lower side cover.
Fig. 3C is a partial side view of a state in which the upper side cover and the lower side cover are combined by the annular band.
Fig. 3D is a partial plan view of the state in which the upper side cover and the lower side cover are combined by the annular band.
Fig. 4A is a schematic sectional view of the first embodiment of the present invention after filtering work.
Fig. 4B is a schematic sectional view immediately after disassembling.
Fig. 5A is a schematic sectional view of a modification of the first embodiment of the present invention after the filtering work.
Fig. 5B is a schematic sectional view immediately after the disassembling.
Fig. 6A is a partially enlarged sectional view of the first embodiment of the present invention.
Fig. 6B is an enlarged view of a (II) part of fig. 6A.
Fig. 7A is a perspective view of an upper side cover and a lower side cover of a second embodiment of the present invention.
Fig. 7B is a perspective view of a main part.
Fig. 7C is a state diagram showing the order of installation.
Fig. 8A is a sectional view of a third embodiment of the present invention.
Fig. 8B is an enlarged view of a (IV) part of Fig. 8A.
Fig. 8C is a sectional view of an upper side cover and a lower side cover.
Fig. 8D is a perspective view of the upper side cover.
Fig. 8E is an enlarged view of a (V) part of Fig. 8F.
Fig. 8F is a perspective view of the lower side cover.
Fig. 8G is an enlarged view of a (VI) part of Fig. 8F.
Fig. 8H is a state diagram showing locking order of a protrusion section and a locking groove.
Fig. 9A is a schematic sectional view of a conventional technique in which a filter by the conventional technique is about to be vertically detached.
Fig. 9B is a plan view of an outer cylinder of a hinged double door type and a filter.
Fig. 10A is a state diagram of pressurization by a filter device in the conventional technique.
Fig. 10B is a state diagram of a further pressurized state.

### BEST MODE FOR CARRYING OUT THE INVENTION

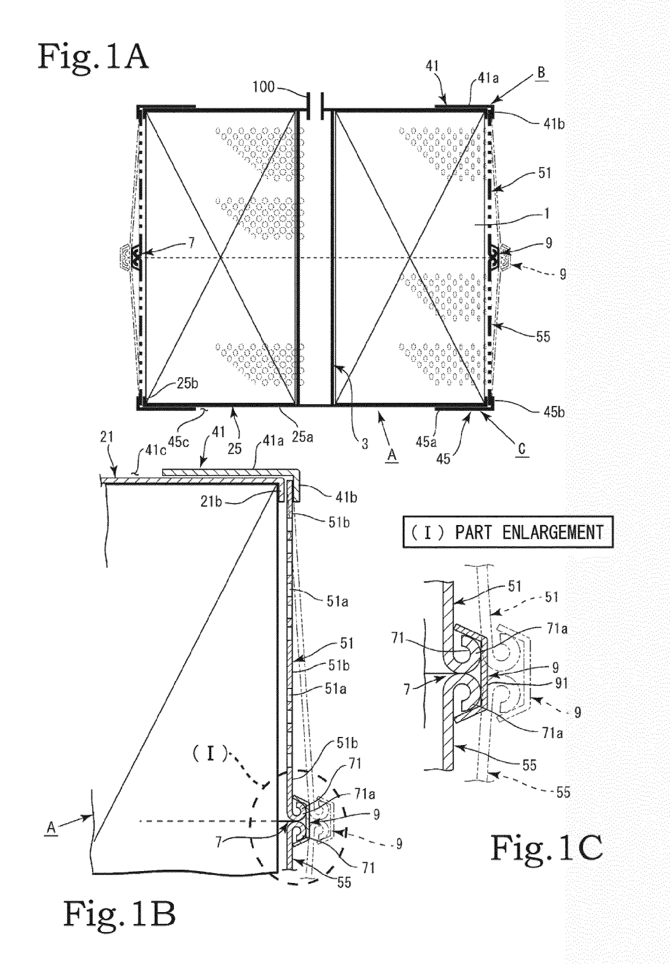

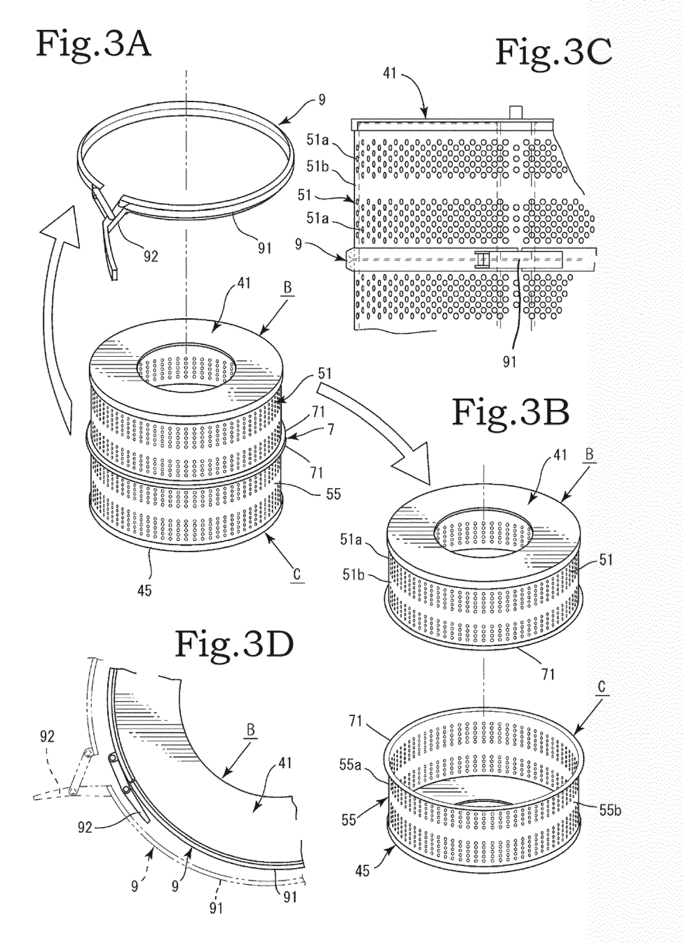

Embodiments of the present invention are explained below with reference to the drawings. There are a first embodiment and a second embodiment. First, the first embodiment is shown in Fig. 1 to Fig. 6. A filter device of the present invention is a type corresponding to an internal pressure type. The filter device is mainly configured by a filtering unit A, an upper side cover B and a lower side cover C, a small-diameter inner cylinder 3, an annular band 9, and the like. The configuration is formed in which working fluid of an electric discharge machine enters the inside of the filtering unit A, flows out in the radial direction from the inside, and further flows out in the radial direction of the circumferences of the cover B and the lower side cover C.

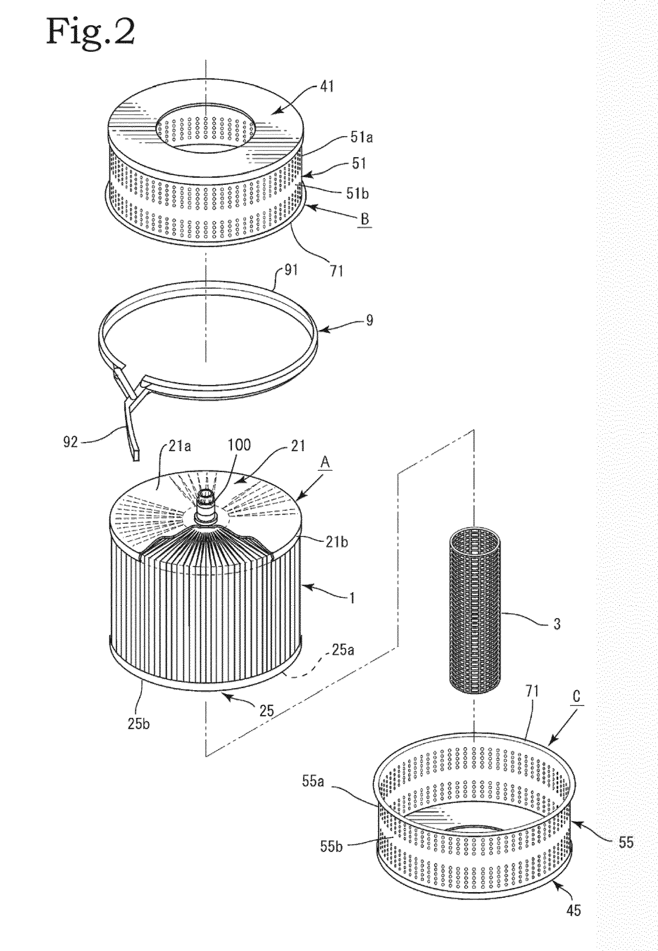

In the filtering unit A, as shown in Fig. 2, a cylindrical filter 1, an upper side resin disk 21, and a lower side resin disk 25 are firmly fixed by an adhesive. The upper side cover B is configured from an upper lid 41 and an upper side outer cylinder 51. The lower side cover C is configured from a lower lid 45 and a lower side outer cylinder 55. Consequently, the working fluid enters the inside of the filtering unit A and flows out from the inside in the radial direction of the circumferences of the upper side outer cylinder 51 and the lower side outer cylinder 55.

The cylindrical filter 1 is configured by paper, fiber, woven fabric, non-woven fabric, or the like. An imaginary outer circumference of the cylindrical filter 1 is formed in a circular shape. The cylindrical filter 1 includes a large number of pleats with polygonal lines contiguous in plan view. An imaginary inner diameter is formed in a small circular shape. The cylindrical filter 1 is formed in a cylindrical shape as a whole in the up-down direction. By forming the cylindrical filter 1 to be folded in this way, a filtering area is increased, thereby improving filtering efficiency.

The upper side resin disk 21 is made of synthetic resin. A disk section 21a and an outer circumference rising edge 21b are integrally formed by injection molding. The height of the outer circumference rising edge 21b is formed to correspond to the height of the upper lid 41. The plate thickness of the upper side resin disk 21 is about 1 to 3 mm. The lower side resin disk 25 is made of synthetic resin. A disk section 25a and an outer circumference rising edge 25b are formed as in the upper side resin disk 21. The dimension and the size of the lower side resin disk 25 are also the same as those of the upper side resin disk 21.

The upper end and the lower end in the longitudinal direction of the cylinder of the cylindrical filter 1 are connected to the upper side resin disk 21 and the lower side resin disk 25 via an adhesive. In this way, the cylindrical filter 1, the upper side resin disk 21, and the lower side resin disk 25 are formed as the filtering unit A.

The small-diameter inner cylinder 3 is configured from a mesh plate made of metal or resin in which a large number of holes are formed. The entire external shape of the small-diameter inner cylinder 3 is formed in a small diameter to be relatively firm. The small-diameter inner circumference 3 is set in a perpendicular shape. The small-diameter inner cylinder 3 is arranged to support the upper side resin disk 21 and the lower side resin disk 25. The small-diameter inner cylinder 3, the upper side resin disk 21, and the lower side resin disk 25 are manufactured fromABS resin, propylene resin, PPGF 20% resin, foamed urethane resin, or the like.

The filtering unit A is configured by the metallic upper side cover B and the lower side cover C such that the upper and lower parts and the outer circumference of the filtering unit A are protected to exhibit strength. That is, the upper side cover B and the lower side cover C form a pair to protect the entire periphery of the filtering unit A. The upper side cover B formed from the upper lid 41 and the upper side outer cylinder 51 and the lower side cover C formed from the lower lid 45 and the lower side outer cylinder 55 are formed in substantially the same shape.

Both of the upper lid 41 and the lower lid 45 are formed by annular plates 41a and 45a and outer circumference rising edges 41b and 45b. Openings 41c and 45c are respectively formed in the inner diameters of the annular plates 41a. The upper lid 41 and the lower lid 45 are made of metal and formed of the same material and in the same shape. The upper side outer cylinder 51 and the lower side outer cylinder 55 are also made of metal and formed of the same material and in the same shape. The upper side outer cylinder 51 and the lower side outer cylinder 55 are formed from punching sections 51a and 55a formed as a large number of ventilation holes and one or a plurality of hoop-like reinforcing belt sections 51b and 55b.

The upper end outer side of the upper side outer cylinder 51 is integrally formed with the inner side of the outer circumference rising edge 41b of the upper lid 41, by welding, roll machining, or the like. The upper end outer side is configured as the upper side cover B made of metal. The lower end outer side of the lower side outer cylinder 55 is integrally formed with the inner side of the outer circumference rising edge 45b of the lower lid 45 by means of, for example, welding and roll machining . The lower side outer side is configured as the lower side cover C made of metal.

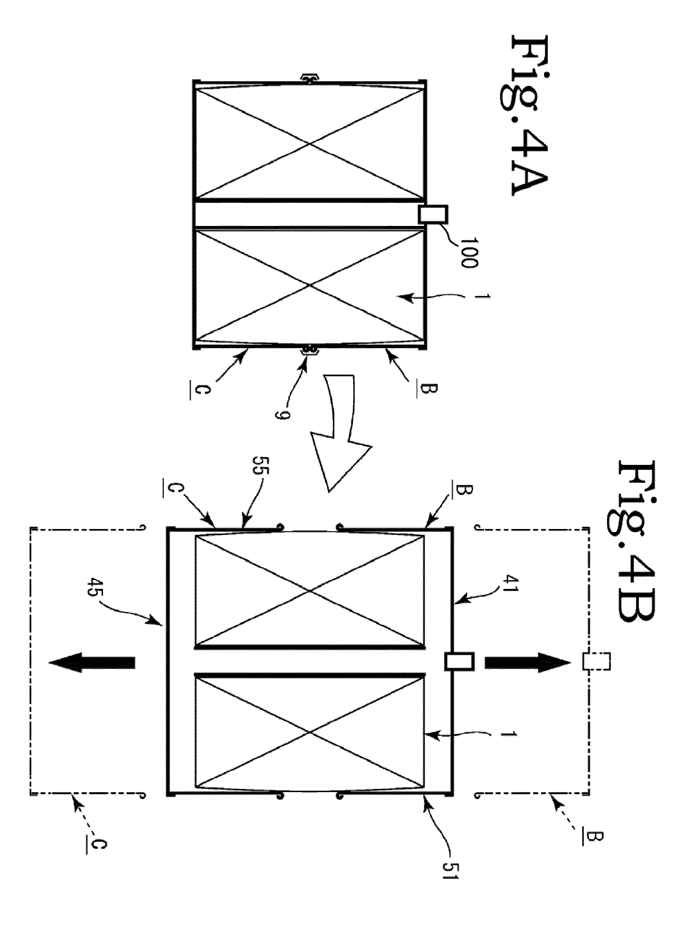

The upper side outer cylinder 51 of the upper side cover B and the lower side outer cylinder 55 of the lower side cover C are formed in the same diameter from the upper to lower parts [see solid lines in Figs. 1A to 1C and Figs. 4A and 4B]. Therefore, as shown in Figs. 4A and 4B, even if the intermediate portion in the up-down direction of the filtering unit A increases in size, if the upper side cover B and the lower side cover C are moved to be disassembled in the up-down direction, since the upper side cover B and the lower side cover C are vertically divided, the upper side cover B and the lower side cover C can be substantially instantaneously detached from the filtering unit A. In the upper side cover B and the lower side cover C, at normal time and during filtering work, the lower end circumferential edge of the upper side cover B and the upper end circumferential edge of the lower side cover C are coupled in a contact state.

As shown in Figs. 1A and 1B, a joined part of the lower end of the upper side cover B and the upper end of the lower side cover C is referred to as divided part 7. In the divided part 7, reinforcing hook sections 71, 71 are formed in upper and lower parts. As the reinforcing hook sections 71, the lower end of the upper side outer cylinder of the upper side cover B is appropriately rounded to be formed as rounded section 71a and the upper end of the lower side outer cylinder 55 of the lower side cover C is appropriately rounded to be formed as the rounded section 71a. The upper side cover B and the lower side cover C in the upper and lower parts are fixed by the annular band 9 in the rounded sections 71a and 71a of the divided part 7.

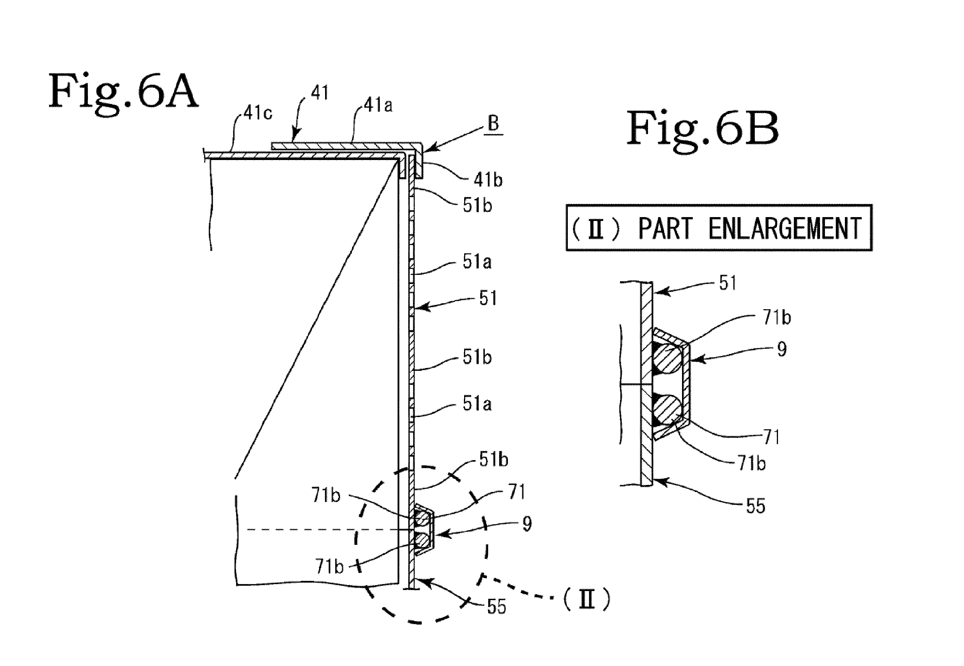

As shown in Figs. 6A and 6B, the reinforcing hook sections 71 are formed as linear sections 71b made of steel. Specifically, the linear section 71b made of steel is firmly fixed by welding to the lower end circumferential edge of the upper side outer cylinder 51 of the upper side cover B. The linear section 71b made of steel is also firmly fixed by welding to the upper end circumferential edge of the lower side outer cylinder 55 of the lower side cover C. Upper and lower members of the part of the linear sections 71b, 71b of the divided part 7 are fixed by the annular band 9. The annular band 9 is configured by a band main body 91 and a fastener 92. The fastener 92 is configured by only one fastener.

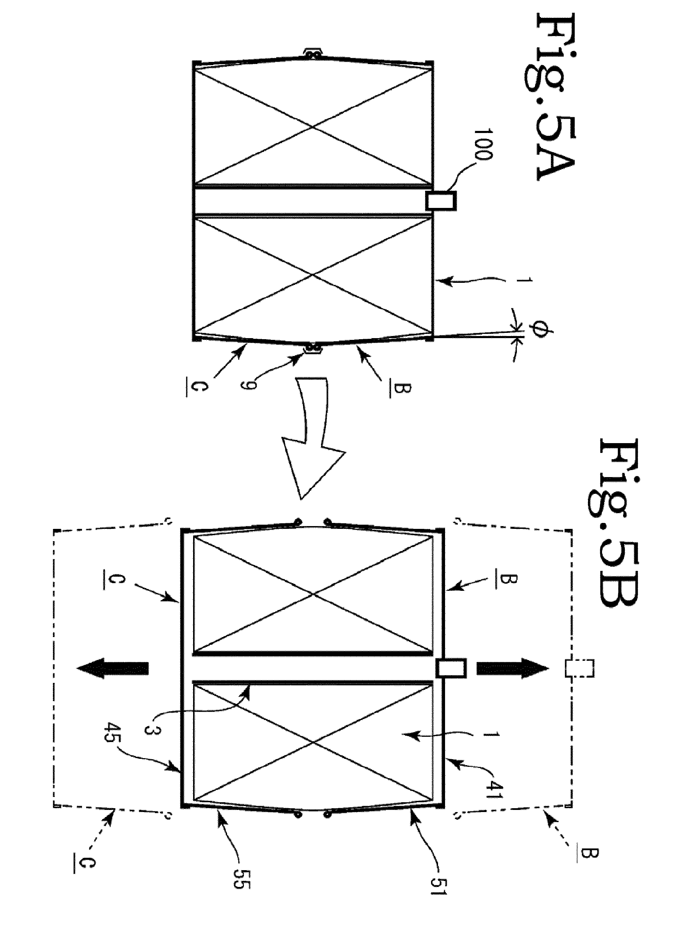

A modification of the first embodiment of the present invention is explained. As indicated by dot-dash lines in Figs. 1A to 1C and shown in Figs. 5A and 5B, the upper side outer cylinder 51 of the upper side cover B is formed as a taper to expand in a diameter downward and the lower side outer cylinder 55 of the lower side cover C is formed as a taper to expand in a diameter upward. A solid angle φ of the expansion of the taper is formed to be the same in the upper and lower parts. The lower end diameter of the upper side cover B and the upper end diameter of the lower side cover C are formed to be the same.

When the upper side outer cylinder 51 and the lower side outer cylinder 55 are formed in the taper shape in this way, as shown in Figs. 5A and 5B, even if the intermediate portion in the up-down direction of the filtering unit A increases in size, if the upper side cover B and the lower side cover C are moved to be disassembled in the up-down direction, the upper side cover B and the lower side cover C can be instantaneously detached from the filtering unit A because of the taper. The effect of the taper can be displayed. In the above explanation, the small-diameter inner cylinder 3 is indispensable. However, if the strength is sufficient, the small-diameter inner cylinder 3 is sometimes detached.

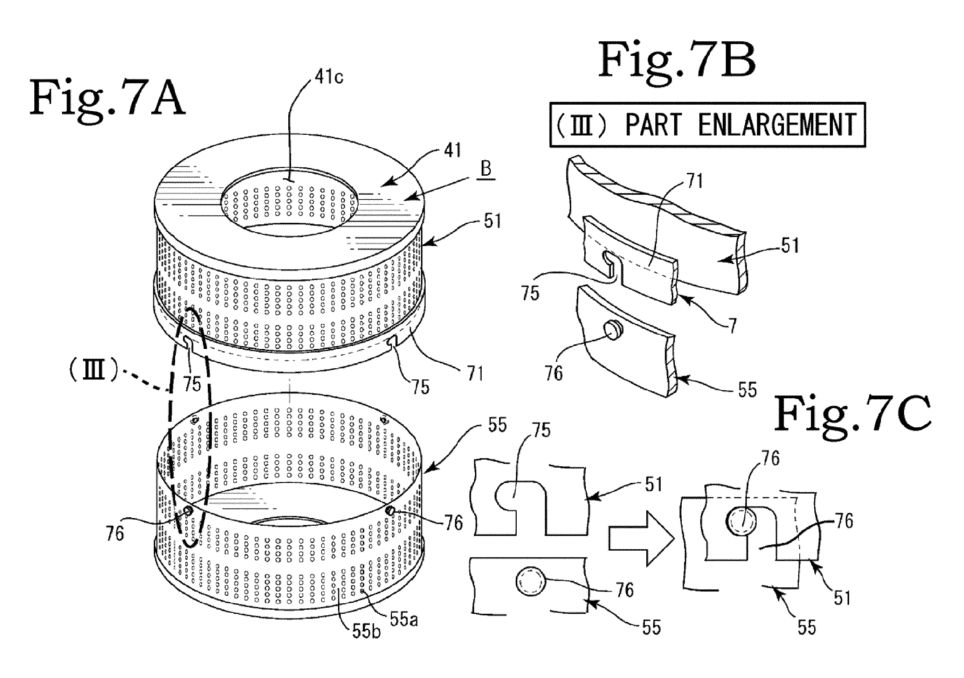

A second embodiment of the present invention is explained with reference to Fig. 7. In particular, the annular reinforcing hook section 71 made of metal is formed at the lower end circumferential edge of the upper side outer cylinder 51 of the upper side cover B. Apluralityof locking sections 75 (specifically, in equally divided four places) are formed on the annular circumference of the reinforcing hook section 71. Protrusion sections 76 made of metal locked to the locking sections 75 are provided to correspond to the locking sections 75 on the circumference of the reinforcing belt section 55b at the upper end circumferential edge of the lower side outer cylinder 55 of the other lower side cover C of the divided part 7 corresponding to the reinforcing hook section 71.

In this case, even if the annular band 9 is absent, the protrusion sections 76 are respectively locked to the locking sections 75. The upper side cover B and the lower side cover C in the upper and lower parts are connected. When the intermediate section in the up-down direction of the filtering unit A increases in size and the upper side cover B and the lower side cover C in the upper and lower parts are disassembled, rotation in the circumferential direction even at a very small angle is necessary to unlock the locking sections 75 and the protrusion sections 76. The force of the increase in the size of the intermediate portion in the up-down direction of the filtering unit A can be prevented from affecting a rotating force in the circumferential direction.

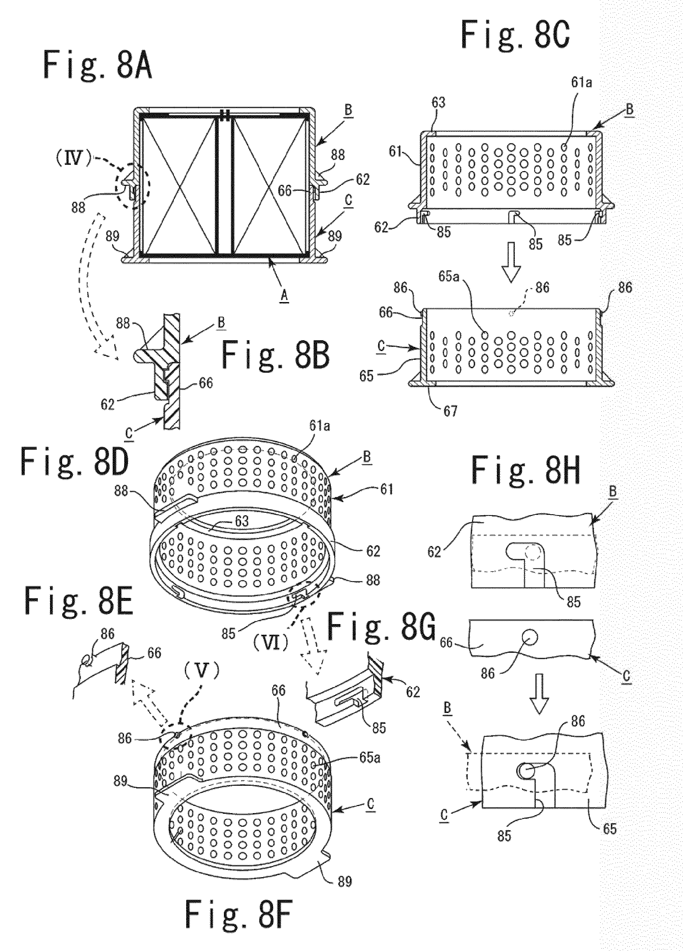

A third embodiment of the present invention is explained with reference to Fig. 8. In particular, the upper side cover B and the lower side cover C are made of synthetic resin rather than metal and integrally formed. An outer side connecting belt-like section 62 is formed at the lower end circumferential edge of an upper side cylinder section 61 of the upper side cover B. An inner side connecting belt-like section 66 is formed at the upper end circumferential edge of a lower side cylinder section 65 of the lower side cover C in a divided state. The inner side connecting belt-like section 66 is configured to be inserted into the outer side connecting belt-like section 62 in a fit state.

As shown in Figs. 8D to 8H, a plurality of the protrusion sections 86 (in equally divided four places in the circumference) are provided at predetermined intervals on the outer circumference of the inner side connecting belt-like section 66. Locking grooves 85 locked to the protrusion sections 86 are provided to correspond to the protrusion sections 86 on the inner circumference of the outer side connecting belt-like section 62. When the protrusion sections 86 and the locking grooves 85 are made of synthetic resin and integrally formed in the third embodiment, as in the case of the small-diameter inner cylinder 3, the upper side resin disk 21, and the lower side resin disk 25, the protrusion sections 86 and the locking grooves 85 are manufactured from ABS resin, propylene resin, PPGF 20% resin, foamed urethane resin, or the like.

In the embodiment shown in Fig. 8, brim sections 88 and 88 are provided in two places to be opposed to each other at the lower end circumferential edge of the upper side cover B. Further, brim sections 89 and 89 are provided in two places to be opposed to each other at the lower end circumferential edge of the lower side cover C. The brim sections 88 and 88 can be parts where both hands are placed. The brim sections 89 and 89 can be parts where feet are placed. The upper side cover B and the lower side cover C can be easily separated.

In this way, the upper side cover B and the lower side cover C are configured to be capable of being locked and separated by the protrusion sections 86 and the locking grooves 85. Punching sections 61a, 65a are formed as a large number of through-holes around the upper side cylinder section 61 and the lower side cylinder section 65. Further, a brim section 63 is provided on the inside at the upper end of the upper side cylinder section 61 of the upper side cover B. The brim section 63 is provided on the inside at the lower end of the lower side cylinder section 65 of the lower side cover C. The brim section 63 is provided on the inside at the upper end circumferential edge.

In the first embodiment of the present invention, the divided part of the upper and lower parts is provided in the center part in the up-down direction. However, the position of the divided part often slightly shifts. This is because, in general, two filter devices of a type same as the present invention are sometimes simultaneously set in parallel. When the filter devices are set in parallel, the annular bands 9, 9 adjacent to each other come into contact and protrude.

To prevent the protrusion, a housing area of the filter devices can be made compact even a little by respectively changing the heights of the annular bands 9, 9 of the filter devices set in parallel to each other. In the second embodiment and the third embodiment, the protrusion sections and the locking sections (the locking grooves) are set with the heights thereof appropriately shifted when the filter devices are set in parallel to each other. Note that reference numeral 100 denotes a coupler into which the working fluid flows.

### EXPLANATION OF REFERENCE NUMERALS

- A: Filtering unit
- B: Upper side cover
- C: Lower side cover
- 1: Annular filter
- 21: Upper side resin disk
- 25: Lower side resin disk
- 3: Small-diameter inner cylinder
- 51: Upper side outer cylinder
- 55: Lower side outer cylinder
- 61: Inner side connecting belt-like section
- 65: Outer side connecting belt-like section
- 7: Divided part
- 71: Reinforcing hook sections
- 71a: Rounded sections
- 71b: Liner sections
- 75: Locking sections
- 76, 86: Protrusion sections
- 86: Locking grooves
- 9: Annular band

## Claims

1. A filter device comprising:
a vertical cylindrical filter including contiguous polygonal lines;
a filtering unit including resin disks bonded respectively to upper and lower parts of the cylindrical filter by an adhesive; and
an upper side cover and a lower side cover made of metal, which can protect upper and lower parts and an outer circumference of the filtering unit and to strengthen the same, and which includes a large number of ventilation holes, wherein
the upper side cover and the lower side cover are formed as two divisions in a height direction,
the divisions are vertically connected during filtering work and fixed in a circumferential direction during disassembling, and
an upper side outer cylinder and a lower side outer cylinder are respectively provided in the upper side cover and the lower side cover.

2. The filter device according to claim 1, wherein
an imaginary inner diameter of the cylindrical filter is formed in a small circular shape,
a small-diameter inner cylinder inserted into the small circular shape of the cylindrical filter is provided, and
the resin disks in the upper and lower parts are supported by the small-diameter cylinder.

3. The filter device according to claim 1 or 2, wherein
the upper side outer cylinder and the lower side outer cylinder are formed in a cylindrical shape having the same diameter from lower to upper sides, and
the cylindrical filter of the filtering unit is housed in the cylinder such that an outer circumference of the cylindrical filter of the filtering unit is in contact with the cylinder.

4. The filter device according to claim 1 or 2, wherein the upper side outer cylinder of the upper side cover has a diameter that gradually increases in size downward and the lower side outer cylinder of the lower side cover that has a diameter that gradually increases in size upward.

5. The filter device according to any one of claims 1, 2, 3, and 4, wherein
reinforcing hook sections are formed in circumferences of the divided parts, and
annular bands are detachably attached to the reinforcing hook sections.

6. The filter device according to claim 5, wherein the reinforcing hook sections are formed as rounded sections obtained by appropriately rounding a lower end of the upper side outer cylinder of the upper side cover and an upper end of the lower side outer cylinder of the lower side cover.

7. The filter device according to claim 5, wherein the reinforcing hook sections are formed as linear sections made of metal.

8. The filter device according to any one of claims 1, 2, 3, and 4, wherein
a reinforcing hook section is formed in one of the divisions,
a plurality of locking sections are formed on a circumference of the reinforcing hook section, and
a protrusion section to be locked to the locking section is provided to correspond to the locking section in the other one of the divisions corresponding to the reinforcing hook section.

9. The filter device according to any one of claims 1, 2, 3, and 4, wherein
the upper side cover and the lower side cover are made of synthetic resin and integrally formed,
a protrusion section is formed at a circumferential edge of one of the divisions, and
a locking section capable of being locked to and unlocked from the protrusion section is formed in the other one of the divisions.
